# EUROPÄISCHE PATENTSCHRIFT

(11) **EP 1 163 783 B1**
(45) Veröffentlichungstag und Bekanntmachung des Hinweises auf die Patenterteilung: **26.09.2012**
(21) Anmeldenummer: 00920383.7
(22) Anmeldetag: 15.03.2000
(51) Int. Cl.: H04M 3/42, H04M 3/493, H04Q 3/00

(54) **VERFAHREN UND EINRICHTUNG ZUM ERMITTELN VON TEILNEHMERRUFNUMMERN DURCH EINGABE DES KFZ-KENNZEICHENS, UM KONTAKT MIT EINEM KFZ-HALTER ÜBER EIN MOBILFUNKNETZ ZU ERMÖGLICHEN**
METHOD AND SYSTEM FOR ASCERTAINING SUBSCRIBER CALL NUMBERS BY INPUTTING THE MOTOR VEHICLE REGISTRATION NUMBER IN ORDER TO MAKE IT POSSIBLE TO CONTACT AN OWNER OF A MOTOR VEHICLE VIA A MOBILE RADIO TELEPHONE NETWORK
PROCEDE ET DISPOSITIF POUR DETERMINER DES NUMEROS D'APPEL D'ABONNES PAR INTRODUCTION DU NUMERO D'IMMATRICULATION D'UNE AUTOMOBILE POUR CONTACTER AVEC LE DETENTEUR DE LADITE AUTOMOBILE PAR L'INTERMEDIAIRE D'UN RESEAU DE TELEPHONIE MOBILE

(30) Priorität: 16.03.1999 DE 19911622; 26.07.1999 DE 19934145
(43) Veröffentlichungstag der Anmeldung: 19.12.2001
(73) Patentinhaber: T-Mobile Deutschland GmbH, 53227 Bonn (DE)
(72) Erfinder: KELLER, Walter, D-40880 Ratingen (DE); NAGEL, Johannes, D-46348 Raesfeld (DE)
(74) Vertreter: Riebling, Peter
(86) Internationale Anmeldenummer: PCT/DE2000/000777
(87) Internationale Veröffentlichungsnummer: WO 2000/056047

(56) Entgegenhaltungen:
- EP-A- 0 841 828
- DE-A- 19 756 035
- DE-A1- 19 704 085
- US-A- 5 016 270
- US-A- 5 668 880

## Beschreibung

Die Erfindung betrifft Verfahren und Einrichtungen zur Rufnummeminformation von Teilnehmern eines oder mehrerer Telekommunikationsnetze, insbesondere Mobilkommunikationsnetze.

In vielen Alltagssituationen ist der direkte Kontakt zwischen zwei sich fremden Teilnehmern eines oder mehrerer Kommunikationsnetze, vorzugsweise Mobilfunknetze, wünschenswert und nützlich. Insbesondere im Straßenverkehr wäre eine Möglichkeit der Kommunikation der Fahrer zweier Fahrzeuge oder auch einem Fußgänger und einem Fahrzeug oft hilfreich. Dies kann vielerlei Situationen betreffen, z.B. den Hinweis auf einen Defekt am Fahrzeug, einen Hinweis auf Gefahrensituationen oder Fahr- und Bedienungsfehler, den Wunsch, ein nettes Gespräch zu führen, oder um allgemeine Fragen zu erörtern bis hin zu Radarwarnung oder einem Hinweis auf Verkehrskontrollen.

Bisher beschränkte sich die Kommunikation im Straßenverkehr auf eine einfache Signalisierung durch Hupe. Lichthupe oder Gesten, etc.

Hier bietet es sich prinzipiell an, dass die Verkehrsteilnehmer sich über Mobilfunk, soweit vorhanden, verständigen und eine Sprach- und Datenkommunikation durchführen können. Ein großes Problem war bisher allerdings, dass die entsprechende Mobilfunkrufnummer des anderen, fremden Verkehrsteilnehmers nicht bekannt war, so dass keine Kommunikationsverbindung zu ihm aufgebaut werden konnte. Eine Möglichkeit, die von Funkamateuren gern angewendet wird, ist, das eigene Rufzeichen von außen sichtbar am Fahrzeug anzubringen. Aufgrund der Länge von Mobilfunkrufnummern (mindestens 10 Ziffern) bereitet es Schwierigkeiten, sich die Nummer beim Vorbeifahren des Fahrzeugs zu merken.

Die DE 197 56 035 A, mit Anmeldetag vom 17.12.1997 und Veröffentlichungstag vom 24.06.1999, lehrt ein Direktwahlverfahren für Mobiltelefone, bei dem ein Teilnehmer seiner Rufnummer eine frei wählbare alphanumerische Anschlusskennung zuordnen kann, unter der er auch erreichbar ist.

Die US 5 668 880 offenbart ein Verfahren zur Kommunikation zwischen Fahrzeugen, wobei in den Fahrzeugen Kommunikationseinrichtungen vorgesehen sind, die jeweils über das Kfz-Kennzeichen des Fahrzeuges identifizierbar sind. Durch Eingabe des Kfz-Kennzeichens in der Kommunikationseinrichtung kann eine Verbindung zu der Kommunikationseinrichtung des zugeordneten Fahrzeugs hergestellt werden. Die Verwendung eines öffentlichen Kommunikationssystems oder einer zentralen Datenverwaltungseinrichtung ist bei beiden Verfahren nicht vorgesehen.

Die EP-A-0 841 828 offenbart ein Verfahren zur Abfrage von Daten aus einer Datenbank. Die Abfrage der Daten wird begleitend zu einem Telefonanruf eines ersten Teilnehmers bei einem zweiten Teilnehmer durchgeführt, wobei die Datenbank Serviceinformationen und Teilnehmerdaten des zweiten Teilnehmers enthält. Nachdem der anrufende Teilnehmer von der Datenbank identifiziert wurde, werden die entsprechenden Informationen aus der Datenbank des zweiten Teilnehmers an ihn übermittelt.

Aus der DE 197 04 085 A ist ein Kommunikationssystem bekannt, welches zur drahtlosen Kommunikation zwischen Fahrzeugen geeignet ist, wobei die Kommunikationseinrichtung jedes Fahrzeugs über das Fahrzeugkennzeichen identifizierbar und anwählbar ist. Hierbei ist es vorgesehen, dass die Kommunikationseinrichtungen der Fahrzeuge direkt, d.h. ohne vermittelnde Stelle, miteinander kommunizieren. Es ist zwar angedeutet, dass die Kommunikation auch über ein öffentliches Telekommunikationsnetz durchgeführt werden kann, jedoch ist hierzu nichts näheres in ausgeführt.

Der Erfindung liegt die Aufgabe zugrunde, Verfahren und Einrichtungen vorzuschlagen, die es einem Teilnehmer eines Telekommunikationsnetzes ermöglichen, die Rufnummer oder Rufadresse eines anderen, möglicherweise unbekannten Teilnehmers des selben oder eines anderen Telekommunikationsnetzes herauszufinden, um z.B. eine Kommunikationsverbindung zu dem anderen Teilnehmer aufbauen zu können.

Diese Aufgabe wird durch Verfahren und Einrichtungen entsprechend der Merkmale der unabhängigen Patentansprüche gelöst.

Der Vorteil der Erfindung liegt darin, dass sie es einem Teilnehmer eines Kommunikationsnetzes ermöglicht, eine Verbindung zu einem anderen Teilnehmer des selben oder eines anderen Kommunikationsnetzes aufzubauen, obwohl dem ersten Teilnehmer z.B. der Name und die Telefonnummer des anderen Teilnehmers unbekannt sind. Voraussetzung hierfür ist, dass zumindest der anzurufende Teilnehmer in einem Merkmals-/Kennzeichenregister einer zentralen Einrichtung registriert ist und dort anhand dieses Merkmals identifiziert werden kann bzw. dass die Kommunikationsendgeräte der Teilnehmer derart ausgebildet sind, dass sie ihre eigene Rufnummer oder Rufadresse anderen im Umkreis befindlichen Endgeräten mitteilen.

In einer ersten Variante des Verfahrens ist es vorgesehen, dass die Rufnummer oder Rufadresse der Teilnehmer in einer an mindestens eines der Kommunikationsnetze angebundenen zentralen Einrichtung mit einem persönlichen und/oder individuellen Merkmal/Kennzeichen der Teilnehmer dynamisch verknüpft und in einer Datenbasis abgespeichert wird, und dort auf Anforderung anhand des Merkmals/Kennzeichnens eindeutig ermittelt und anderen Teilnehmern zur Verfügung gestellt werden kann.

Vorteilhafte Weiterbildungen und Ausführungsformen der Erfindung sind Gegenstand der abhängigen Ansprüche.

Sinnvollerweise werden als persönliche und/oder individuelle Merkmale der Teilnehmer Merkmale oder Kennzeichen verwendet, die jedermann bekannt oder für jedermann leicht ersichtlich oder zugänglich sind. Als Merkmal/Kennzeichen kann z.B. eine numerische oder alphanumerische Zeichenfolge verwendet werden, z.B. das Kfz-Kennzeichen des Fahrzeugs des Teilnehmers. Gerade im Straßenverkehr ist das Kfz-Kennzeichen für jedermann leicht ersichtlich, so dass mit Hilfe des erfindungsgemäßen Verfahrens schnell eine Verbindung zum Fahrer des entsprechenden Fahrzeuges hergestellt werden kann. Das gleiche Verfahren kann bei beliebigen anderen Verkehrsmitteln, wie beispielsweise in der Luftfahrt, der Seefahrt, bei Schienenfahrzeugen, Bussen, Taxen etc. für eine allgemeine Erreichbarkeit insbesondere der Fahrer herangezogen werden, wenn die betreffenden Fahrzeuge oder Einrichtungen über eine entsprechende individuelle nach aussen sichtbare oder allgemein bekannte Kennzeichnung verfügen.

Vorzugsweise sind den Merkmalen/Kennzeichen mindestens eine Rufnummer bzw. Rufadresse einer zugehörigen Telekommunikationseinrichtung des gleichen oder eines externen Telekommunikationsnetzes zugeordnet.

Für eine Rufnummernanfrage und/oder einen nachfolgenden Verbindungsaufbau übermittelt der rufende Teilnehmer das entsprechende bekannte Merkmal/Kennzeichen des anzurufenden Teilnehmers an die zentrale Einrichtung, wobei dort anhand des übermittelten Merkmals die zugehörige Rufnummer/Rufadresse des anzurufenden Teilnehmers ermittelt und an den rufenden Teilnehmer übermittelt wird. Es kann dann durch Wählen der übermittelten Rufnummer ein Verbindungsaufbau zum gewünschten Teilnehmer erfolgen.

Auf Wunsch des rufenden Teilnehmers initiiert die zentrale Einrichtung anhand der ermittelten Rufnummer/Rufadresse automatisch einen Verbindungsaufbau zwischen dem rufenden Teilnehmer und dem anzurufenden Teilnehmer.

Zur Anbindung an mindestens eines der Kommunikationsnetze umfasst die zentrale Einrichtung zumindest je eine Ein- und Auswahlsteuerungseinrichtung (Verbindungssteuerung).

Erfindungsgemäß werden die in der zentralen Einrichtung eingetragenen Daten für die Zuordnung und Umsetzung der teilnehmerindividuellen Kennzeichen zur telekommunikationsnetzspezifischen Rufnummer oder Rufadresse herangezogen, wobei vorteilhaft das Merkmal/Kennzeichen vorzugsweise als Teil der dienstespezifischen Rufnummer eingegeben (mitgewählt) wird, und somit der Wahlvorgang (Verbindungsaufbau) entsprechend vereinfacht wird. Dabei kann das als Wahlbestandteil verwendete Merkmal/Kennzeichen seitens der zentralen Einrichtung unmittelbar zur Adressierung des Registersatzes (der Datenbasis) der zugehörigen Rufnummer bzw. Rufnummern verwendet werden.

Zur erstmaligen Einrichtung des erfindungsgemäßem Zusatzdienstes muss der Teilnehmer mindestens ein persönliches und/oder individuelles Merkmal/Kennzeichen, z.B. sein Kfz-Kennzeichen, an die zentrale Einrichtung übermitteln, welches Merkmal dort seiner Rufnummer/Rufadresse zugeordnet und zusammen mit dieser in einer Datenbasis abgespeichert wird.

Vorzugsweise erfolgt die Übermittlung der Daten, d.h. die Kommunikation zwischen dem Teilnehmer und der zentralen Einrichtung über den Kurznachrichtendienst (SMS), der in digitalen Mobilfunknetzen verfügbar ist und eine einfache und schnelle Nachrichtenübermittlung erlaubt. Alternativ kann die Übermittlung der Daten zwischen dem Teilnehmer und der zentralen Einrichtung mittels DTMF-Signalisierung erfolgen.

Für besondere Bedarfsgruppen und Anwendungsfälle lässt sich auch eine Kombination des Rufnummeminformationsdienstes mit einem entsprechenden Berechtigungsverfahren (Authentisierungsprozedur) zur Herstellung der Verbindung kombinieren. Insbesondere wenn beispielsweise Automaten, Telemetrie- oder Steuerungseinrichtungen, Eisenbahnwagen, Container etc. über eine entsprechende Verfahrensweise der Zuordnung einer Geräte- oder Standortkennung erreichbar sind.

Insbesondere bei solchen Verbindungen, wo Daten übertragen werden, ist alternativ zur Rufnummer in vorgenanntem Beispiel eine Erreichbarkeit mittels datennetzspezifischen Adressverfahren und Rufadressen, beispielsweise IP-Adresse oder E-mail-Adresse, anstelle der in Sprachnetzen üblichen Rufnummer erforderlich.

Die zentrale Einrichtung ist in einer bevorzugten Konfiguration in allen angeschlossenen Kommunikationsnetzen über die gleiche Kurzwahlnummer bzw. Adresse, beispielsweise "AUTO", erreichbar. Zur Nutzung des Rufnummerninformationsdienstes muss der Teilnehmer die Rufnummer bzw. Adresse der zentralen Einrichtung anwählen und seine Anfrage stellen. Ferner umfasst die zentrale Einrichtung über Möglichkeiten der Anschaltung eines Administrationsterminals bzw. Benutzersteuerung, von externen Datenbanken, oder anderer Kommunikationsnetze (Intranet, LAN, Internet, etc.)

In einer zweiten Variante des Verfahrens ist es vorgesehen, dass die Rufnummer/Rufadresse der Teilnehmer von deren Kommunikationsendgerät in definierten Zeitabständen (periodisch) in einem bestimmten Sendebereich ausgesendet und von Endgeräten anderer, sich in diesem Sendebereich aufhaltenden Teilnehmer empfangen werden kann.

Eine entsprechende Funktion zur Aussendung der eigenen Rufnummer bei Kommunikationsendgeräten lässt sich mit geringem Aufwand z.B. bei Mobilfunkendgeräten realisieren. Diese Funktion sollte natürlich vom Teilnehmer wahlweise abschaltbar sein.

Vorteilhaft wird eine von einem anderen Teilnehmer empfangene Rufnummer automatisch im Display des eigenen Endgeräts angezeigt, und es kann eine automatische oder manuelle Anwahl der Rufnummer erfolgen.

Alternativ kann eine von einem anderen Teilnehmer empfangene Rufnummer im Endgerät automatisch einem bestimmten Speicherplatz eines im Endgerät vorhandenen Rufnummernspeichers zugeordnet und von dort z.B. per Kurzwahltaste abgerufen werden.

Um unnötigen "Nummemballast" zu vermeiden, wird es bevorzugt, dass immer nur das/die stärkste(n) empfangene(n) Signal(e) ausgewertet und die zugeordnete Rufnummer angezeigt und/oder gespeichert wird/werden. Entsprechend empfiehlt es sich, den Sendebereich, in welchem die Rufnummer ausgesendet wird, auf einige zehn bis hundert Meter zu beschränken.

Die Erfindung wird im folgenden unter Verwendung von Zeichnungsfiguren, die hier lediglich mögliche Ausführungsarten am Beispiel des verbreiteten GSM-Netzes in schematischer Darstellung beschreiben, erläutert, wobei sich anhand der Zeichnungsfiguren weitere Merkmale, Vorteile und Anwendungsgebiete der Erfindung ergeben. Es zeigen:
- Figur 1:: einen möglichen Ablauf des Verfahren in einer ersten Variante;
- Figur 2:: Blockschaubild für ein erfindungsgemäßes kennzeichenorientiertes Verbindungssystem nach der ersten Variante;
- Figur 3:: Blockschaubild des möglichen Aufbaus einer zentralen Einrichtung (Kennzeichenserver);
- Figur 4:: einen möglichen Ablauf des Verfahren in einer zweiten Variante.

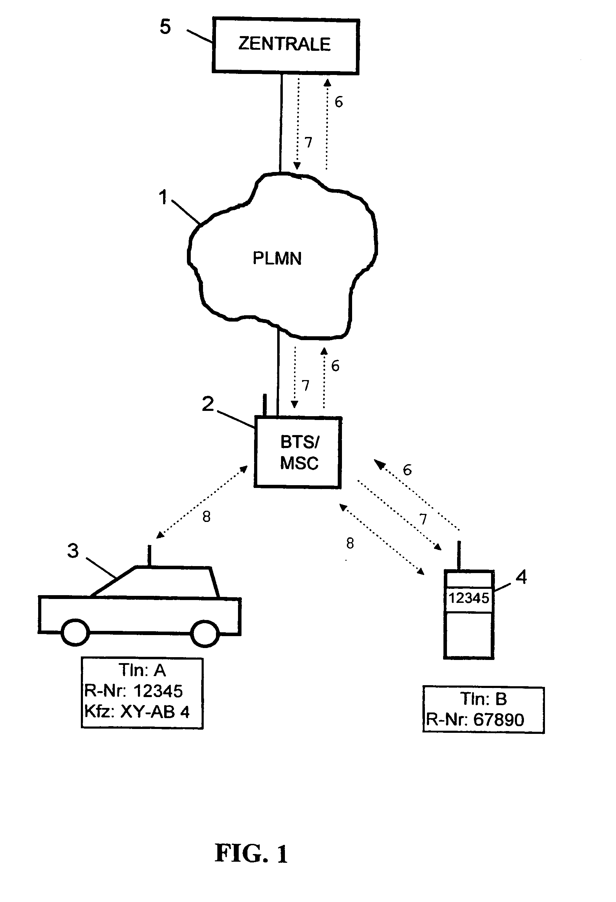

In Figur 1 ist schematisch ein vorzugsweise digitales, zellulares Mobilfunknetz 1 (PLMN) dargestellt, welches über Vermittlungsstellen und Basisstationen 2 (MSC/BTS) verfügt, über welche Mobilfunkteilnehmer 3 und 4 (auch Tln A und Tln B) miteinander kommunizieren können.

Es wird davon ausgegangen dass der Teilnehmer 4 mit einem Teilnehmer 3, der gerade in einem Fahrzeug vorbeifährt oder sich in der Nähe des Teilnehmers 4 befindet, Kontakt aufnehmen möchte. Dem Teilnehmer 4 ist jedoch die Mobilfunkrufnummer des Teilnehmers 3 nicht bekannt.

Eine Kontaktaufnahme zum Teilnehmer 3 ist erfindungsgemäß möglich, falls sich dieser Teilnehmer bereits bei einem Zusatzdienst, der hier als "Car-Call" bezeichnet wird, registriert hat. Dazu muss der Teilnehmer 3 mit einer an das Mobilfunknetz angebundenen zentralen Einrichtung 5 Kontakt aufnehmen und seine Mobilfunkrufnummer "12345" zusammen mit einem persönlichen Merkmal, z.B. seinem Kfz-Kennzeichen "XY-AB 4", an diese übermitteln. Die Übermittlung der Nachricht kann über SMS erfolgen. In der zentralen Einrichtung werden diese Daten dynamisch miteinander verknüpft und in einer Datenbasis abgespeichert.

Falls nun der Teilnehmer 4 das Kfz-Kennzeichen "XY-AB 4" des Teilnehmers 3 kennt oder bei der Vorbeifahrt erkennt, kann er die zentrale Einrichtung anrufen, unter einer speziellen Rufnummer, und das Kfz-Kennzeichen des Teilnehmers 3 über eine Nachricht 6, z.B. per SMS, an die zentrale Einrichtung 5 übermitteln. Dort wird anhand des übermittelten Kfz-Kennzeichens "XY-AB 4" die entsprechende Mobilfunkrufnummer "12345" des anzurufenden Teilnehmers 3 ermittelt und über eine SMS-Nachricht 7 zurück an den rufenden Teilnehmer 4 übertragen. Die Rufnummer kann z.B. auf dem Display des Endgerätes des Teilnehmers 4 angezeigt werden.

Anhand der übermittelten Rufnummer "12345", die der Teilnehmer 4 wählt, kann nun über das Mobilfunknetz 1, 2 ein Verbindungsaufbau 8 zwischen den beiden Teilnehmern 3 und 4 erfolgen.

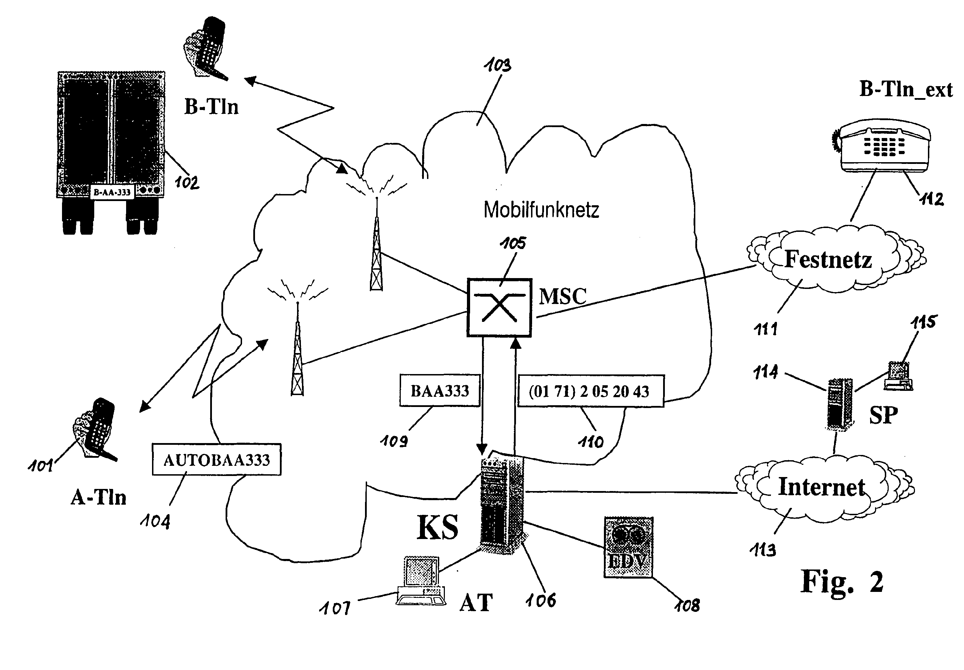

Der detaillierte Verfahrensablauf wird nachfolgend anhand von Figur 2 erläutert. Ein Teilnehmer 101 eines Mobilfunknetzes 103 (A-Tln) möchte den Halter oder Fahrer eine Lastkraftwagens 102 mit dem Kennzeichen B-AA-333 beispielsweise in einer Notsituation wegen drohendem Ladungsverlust auf der Autobahn erreichen.

Hierzu stellt er zunächst eine Verbindung zum entsprechenden "Dienst" seines Mobilfunknetzes her, wobei er beispielsweise als Initiierung bzw. Dienstekennung im Kurzwahlverfahren die Buchstabenkombination "AUTO" gemäß der seinem Tastwahlblock zugeordneten Buchstabenfolgen seines Mobilfunkgerätes (Vanity-Verfahren) eingibt und daraufhin netzseitig in der Vermittlungsstelle 104 (Mobile Switching Center MSC) des Mobilfunknetzes 103 mit der erfindungsgemäßen zentralen Einrichtung, im folgenden auch als Kennzeichenserver 106 bezeichnet, verbunden wird.

Der Kennzeichenserver 106 kann hierbei als dedizierte separate Hardwareeinrichtung oder netzspezifisch als Softwaremodul in der Vermittlungseinrichtung 105 (beispielsweise als Intelligent Network- /IN-Dienst) ausgeführt sein.

Der Teilnehmer 101 gibt in diesem Beispiel weiterhin das Kennzeichen BAA333 des Kraftfahrzeuges 102 als "Zielrufnummer" in gleicher Verfahrensweise ein. Diese Zeichenfolge 104 wird an die Vermittlungsstelle übertragen. Der Kennzeichenserver 106 empfängt von der Vermittlungsstelle 105 die Zeichenfolge "BAA333" (109) und überprüft, ob dieses Kennzeichen in der Kennzeichendatenbank/Kennzeichenregister des Kennzeichenservers 106 als Referenzeintrag vorhanden ist. Im positiven Fall, wird aus dem jeweils zugeordneten Rufnummernregister die zugeordneten Rufnummer 110 (z.B. 0171..) bzw. Netzwerkadresse der zugeordneten Kommunikationseinrichtung automatisch entnommen und der Aufbau der Verbindung zum Fahrer des Lastkraftwagens 102 im gleichen Netz über eine Vermittlungseinrichtung 105 vorgenommen.

Alternativ kann bei diesem Verfahren auch die Rufnummer bzw. Adresse innerhalb eines anderen Kommunikationsnetzes, z.B. Festnetz 111, im Kennzeichenserver 106 gespeichert sein. Der Verbindungsaufbau erfolgt hierbei ebenfalls über die entsprechenden netzspezifischen Einrichtungen der Vermittlungsstelle 105 über das Festnetz 111 zum Festnetzteilnehmer 112 (B-Tln_ext).

Die zugeordnete Kommunikationseinrichtung kann ein beliebiges Kommunikationsendgerät sein, beispielsweise ein Mobiltelefon des Fahrers, der Festnetzanschluss einer Leitstelle oder Firmenzentrale, ein automatisches Empfangsgerät/ Modem innerhalb eines Automaten, eine Datenbankeinrichtung etc. In diesem Sinne kann für jedes Fahrzeug bzw. für jede Einrichtung eine individuelle oder alternativ eine gruppenspezifische Endgerätenummer zugeordnet werden.

Bei Vorschaltung eines entsprechenden optionalen Authentisierungsverfahrens, beispielsweise mittels entsprechender Geheimnummer, können ebenfalls optional unterschiedliche zugeordnete Rufnummern zu einem Kennzeichenregister vorhanden sein. Beispielsweise erreicht der Anrufer in diesem Fall bei der "Wahl" einer Taxinummer stets die zugeordnete Zentrale, während bei Kenntnis und menügeführter Eingabe der Geheimnummer der Fahrer unmittelbar erreicht wird.

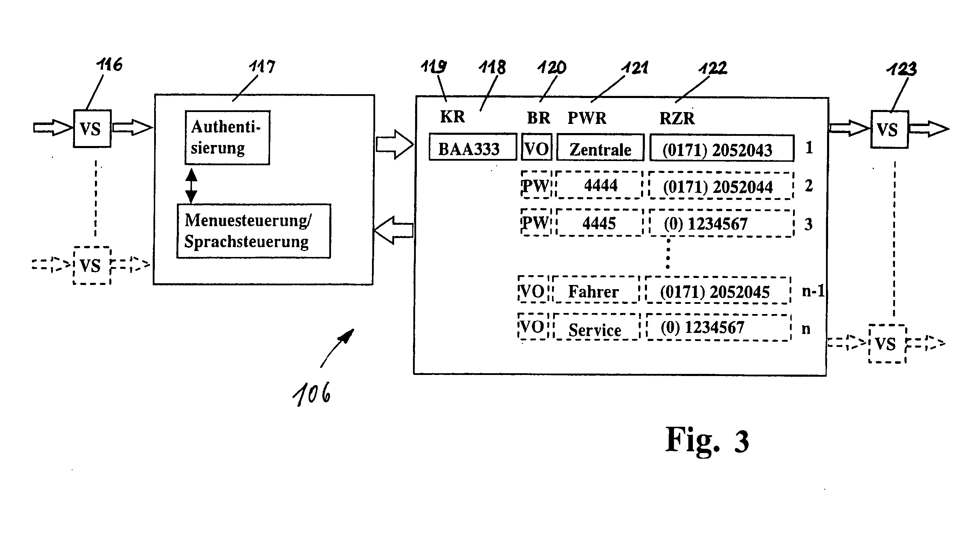

Figur 3 verdeutlicht diese Verfahrensweise. Der Kennzeichenserver 106 ist über eine Verbindungssteuerung 116 an ein Kommunikationsnetz angebunden. Es ist vorzugsweise eine Menüsteuerungs- und Authentisierungseinrichtung 117 vorgesehen, die entsprechende Authentisierungssequenzen, z.B. ein Passwort, auswertet und entsprechende Register in der Datenbank 118 freigibt oder sperrt. Die Datenbank 118 umfasst dabei die eigentlichen Kennzeichenregister 119, Berechtigungsregister 120, Passwortregister 121 und Register für die den Kennzeichen zugeordneten Rufnummern 122. Bei unauthorisierten Zugang wird in diesem Beispiel bei Kennzeichenangabe "BAA333" zur Rufnummer (0171) 2 05 20 43 weitervermittelt. Besitzt der Anrufer das Kennwort 4444, so gelangt er zu (0171) 2 05 20 44, besitzt er gar das Kennwort 4445, so wird er zur Festnetzrufnummer (0) 1234567 weitervermittelt.

In diesem Beispiel sind zwei weitere Optionen dargestellt. Der Registersatz n-1 enthält beispielsweise die zentrale Vertriebsrufnummer und der letzte Registersatz n die Rufnummer der Servicestelle des betreffenden Unternehmens (alles in Verbindung mit dem zugehörigen Fahrzeug mit o.g. Kennzeichen). Die Berechtigungsregister 120 dienen in Verbindung mit der optionalen Menüsteuerungs- und Authentisierungseinrichtung 117 zur Kennzeichnung, ob der betreffende Rufnummerneintrag mit besonderem Passwortschutz gesichert ist, oder ob es sich um eine per Menüsteuerung für beliebige Anrufer bereitgestellte selektierbare Option handelt, die ihm nach Eingabe und kennzeichenserverseitige Erkennung der Kennzeichennummer optional angeboten wird.

Optional lässt sich als zusätzliches Sicherheitskriterium die Anrufernummer mit auswerten, wenn der dem spezifischen Kennzeichen zugeordnete Registersatz entsprechend den berechtigten Anrufern erweitert wird und eine entsprechende Signalisierung zur Vermittlungsstelle vorhanden ist, über welche die Rufnummer des anrufenden Teilnehmers zum Kennzeichenserver übertragen wird.

Die Administration der fahrzeugspezifischen Einträge erfolgt vorzugsweise über ein üblich Administrationsterminal 107 seitens Netz- oder Servicebetreiber des Kennzeichenservers nach Benennung der entsprechenden Eintragungswünsche des betreffenden Teilnehmers oder alternativ im Remote-Verfahren beispielsweise über einen entsprechenden Internetzugang 113 eines Serviceproviders 114 oder Großkunden mit direktem Administrationszugang 115 zum Kennzeichenserver 106. Im letzten Fall verfügt der Server über zusätzliche Zugangssicherheits- und Schnittstellenfunktionen.

Optional ist die Verbindung zwischen Kennzeichenserver 106 und zumindest einer externen Datenbankeinrichtung möglich, die insbesondere dann sinnvoll ist, wenn beispielsweise ein Zugriff durch besonders berechtigte und durch ein optionales Authentisierungsverfahren im Kennzeichenserver gesicherte Benutzergruppen zum Kennzeichenserver erfolgt und die Rufnummer bzw. weitere Informationen nicht unmittelbar im Kennzeichenserver vorhanden sind. Solch ein Fall kann beispielsweise die Anschaltung einer entsprechenden Datenbank einer Kraftfahrzeug- oder Schifffahrtsbehörde zwecks Ermittlung von beispielsweise Fahrzeug- und Halterdaten sein, oder beispielsweise eine Betreibergesellschaft für installierte Automaten etc. In solch einem Fall kann die externe Datenbank wahlweise über eine eigene Menüsteuerung verfügen, oder es kann alternativ und optional eine, in der Regel anwendungsspezifische, Menüsteuerung im Kennzeichenserver verwendet werden.

Ebenfalls optional verfügt der Kenzeichenserver über direkte Schnittstellen zu mindestens einem oder mehreren Kommunikationsnetzen, zum Internet 113, zu Geschäftsteilnehmern (EDV-, LAN-Anschluss 108), bzw. zu Serviceprovidern 114, zu denen über eine oder mehrere der zugeordneten Nummern entsprechende Verbindungen aufgebaut werden können.

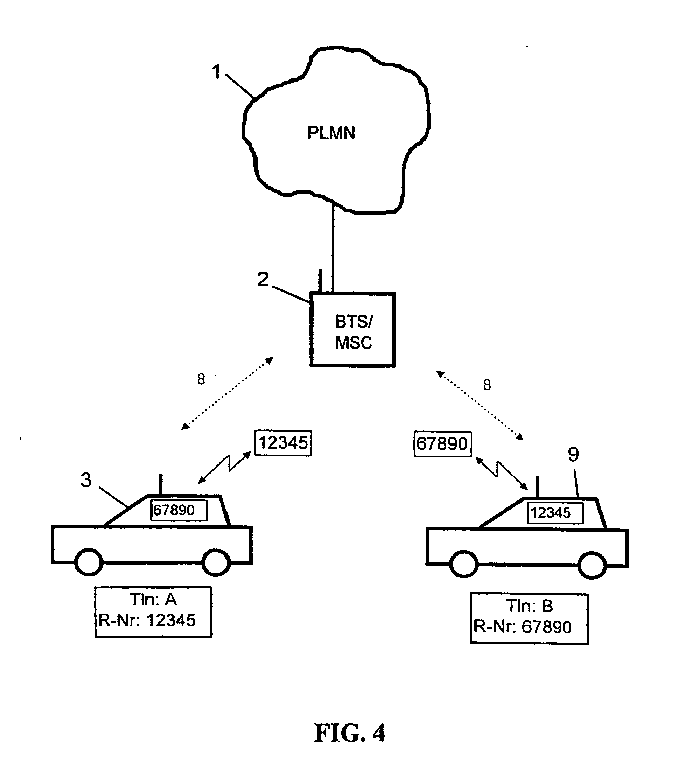

Figur 4 zeigt eine zweite Variante der Erfindung, wobei analog zu Figur 1 wiederum das Mobilfunknetz 1, 2 dargestellt ist, über das die Teilnehmer 3 und 9 kommunizieren können.

Erfindungsgemäß sendet das Endgerät jedes Teilnehmers 3, 9 seine eigene Mobilfunkrufnummer in definierten Zeitabständen und in einem bestimmten Sendebereich aus. Das Endgerät des Teilnehmers 3 sendet periodisch die eigene Rufnummer "12345", wogegen das Endgerät des Teilnehmers 9 die eigene Rufnummer "67890" aussendet. Die ausgesendeten Rufnummern werden vom Endgerät des jeweils anderen, sich in diesem Sendebereich aufhaltenden Teilnehmer, empfangen und können z.B. auf dem Display dessen Endgerätes angezeigt werden.

Anhand der jeweils angezeigten Rufnummer des anderen Teilnehmers kann nun über das Mobilfunknetz 1, 2 ein Verbindungsaufbau 8 zwischen den beiden Teilnehmern 3 und 9 erfolgen. Diese Variante hat den Vorteil, dass es beiden Teilnehmern möglich ist, einen Rufaufbau einzuleiten, da beide die Rufnummer des anderen Teilnehmers kennen.

Ein weiterer Vorteil ist, dass eine zentrale Einrichtung, gemäss der Ausführung nach den Figuren 1 bis 3, zur Durchführung dieser Verfahrensvariante nicht benötigt wird.

### Zeichnungslegende

- 1: Mobilfunknetz (PLMN)
- 2: Vermittlungsstelle/Basisstation (MSC/BTS)
- 3: Mobilfunkteilnehmer
- 4: Mobilfunkteilnehmer
- 5: Zentrale Einrichtung
- 6: Nachricht
- 7: SMS-Nachricht
- 8: Verbindungsaufbau
- 9: Mobilfunkteilnehmer
- 101: Teilnehmer
- 102: Lastkraftwagen
- 103: Mobilfunknetz
- 104: Zeichenfolge
- 105: Vermittlungsstelle
- 106: Kennzeichenserver KS
- 107: Administrationsterminal AT
- 108: Datenbankeinrichtung
- 109: Zeichenfolge
- 110: Rufnummer
- 111: Festnetz
- 112: Festnetzteilnehmer
- 113: Internet
- 114: Serviceprovider SP
- 115: Internetteilnehmer
- 116: Verbindungssteuerung VS
- 117: Menüsteuerungs- und Authentisierungseinrichtung
- 118: Datenbank
- 119: Kennzeichenregister KR
- 120: Berechtigungsregister BR
- 121: Passwortregister PWR
- 122: Rufnummernregister RZR
123 Verbindungssteuerung
- PW: Passwort
- VO: Verbindungsoption

## Patentansprüche

1. Verfahren zur Rufnummeminformation zwischen Teilnehmern eines oder mehrerer Telekommunikationsnetze, insbesondere Mobilfunknetze, wobei die Rufnummer oder Rufadresse zumindest des anzurufenden Teilnehmers dem rufenden Teilnehmer zunächst nicht bekannt ist, wobei eine zentrale Einrichtung (5; 106) an mindestens eines der Kommunikationsnetze (1; 103) angebunden und derart ausgeführt ist, daß sie über zumindest je eine Ein- und Auswahlsteuerungseinrichtung (116, 123) zum Telekommunikationsnetz sowie über Merkmals / Kennzeichenregister (113) verfügt, denen Rufnummernregister mit jeweils mindestens einer Rufnummer bzw. Netzadresse einer zugehörigen Telekommunikationseinrichtung des gleichen oder eines externen Telekommunikationsnetzes zugeordnet sind.
wobei das Verfahren folgende Schritte umfasst:
- Anwahl der zentralen Einrichtung (5; 106) unter Verwendung einer dienstespezifischen Rufnummer durch den rufenden Teilnehmers und Übermittlung eines individuellen Merkmals / Kennzeichens des anzurufenden Teilnehmers als Wahlbestandteil der dienstespezifischen Rufnummer an die zentrale Einrichtung,
- Überprüfung in der zentralen Einrichtung, ob das übermittelte Merkmal /Kennzeichen im Merkmals-/Kennzeichenregister (119) als Referenzeintrag vorhanden ist,
- Adressierung des Registersatzes (122) der zugehörigen Rufnummer bzw. Rufnummern im Rufnummemregisters anhand des übermittelten und im Kenzeichenregister vorhandenen Merkmals / Kennzeichens,
- automatischer oder teilnehmergesteuerter Aufbau einer Verbindung zwischen dem rufenden und dem anzurufenden Teilnehmer unter Verwendung der dem Merkmal / Kennzeichen zugeordneten Rufnummer /Rufadresse.

2. Verfahren nach Anspruch 1, **dadurch gekennzeichnet, dass** als persönliche und/oder individuelle Merkmale/Kennzeichen der Teilnehmer Merkmale/Kennzeichen verwendet werden, die jedermann bekannt, für jedermann leicht ersichtlich oder zugänglich sind.

3. Verfahren nach einem der Ansprüche 1 oder 2, **dadurch gekennzeichnet, dass** als Merkmal/Kennzeichen eine numerische oder alphanumerische Zeichenfolge verwendet wird.

4. Verfahren nach einem der Ansprüche 1 bis 3, **dadurch gekennzeichnet, dass** als Merkmal/Kennzeichen das Kfz-Kennzeichen eines Fahrzeugs der Teilnehmer verwendet wird.

5. Verfahren nach einem der Ansprüche 1 bis 4, **dadurch gekennzeichnet, dass** die in der zentralen Einrichtung (5) eingetragenen Daten für die Zuordnung und Umsetzung der teilnehmerindividuellen Kennzeichen zur telekommunikationsnetzspezifischen Rufnummer oder Rufadresse herangezogen werden.

6. Verfahren nach einem der Ansprüche 1 bis 5, **dadurch gekennzeichnet, dass** der Teilnehmer zur erstmaligen Einrichtung des Dienstes mindestens ein persönliches und/oder individuelles Merkmal/Kennzeichen an die zentrale Einrichtung (106) übermittelt, das dort seiner Rufnummer/Rufadresse zugeordnet und zusammen mit dieser in dem Merkmals/Kenzeichenregister (119) abgespeichert wird.

7. Verfahren nach einem der Ansprüche 1 bis 6, **dadurch gekennzeichnet, dass** die Übermittlung der Daten zwischen den Teilnehmern und der zentralen Einrichtung über den Kurznachrichtendienst eines Mobilfunknetzes, SMS, erfolgt.

8. Verfahren nach einem der Ansprüche 1 bis 6, **dadurch gekennzeichnet, dass** die Übermittlung der Daten zwischen den Teilnehmern und der zentralen Einrichtung mittels DTMF-Signalisierung erfolgt.

9. Verfahren nach einem der Ansprüche 1 bis 8, **dadurch gekennzeichnet, dass** die Anschaltung zumindest einer externen Datenbank (108) an die zentrale Einrichtung (106) vorgesehen ist, die in Kombination mit einer Authentisierungs- und Menüsteuerungseinrichtung sowie einer zusätzlichen Datenbanksteuerungseinrichtung, Datenbankclient, den authorisierten Zugriff auf externe und in der Regel besonders gesicherten Daten für zumindest eine definierte Benutzergruppe ermöglicht.

10. Verfahren nach einem der Ansprüche 1 bis 9, **dadurch gekennzeichnet, dass** bei externem Datenbankanschluss die Benutzersteuerung zur Ein- bzw. Ausgabe der Daten an die zentrale Einrichtung vorgenommen wird.

11. Verfahren nach einem der Ansprüche 1 bis 10, **dadurch gekennzeichnet, dass** die zentrale Einrichtung (5; 106) in allen angeschlossenen Kommunikationsnetzen in einer bevorzugten Konfiguration über die gleiche vorzugsweise Kurzwahlnummer/Adresse erreichbar ist.

12. Verfahren nach einem der Ansprüche 1 bis 11, **dadurch gekennzeichnet, dass** das Verfahren bei entsprechender individueller Kennzeichnung für beliebige mobile Verkehrsmittel, wie Personen-, Fracht- und Baustellenfahrzeuge, Boote, Flugzeuge, Wagons etc. sowie beliebige mobile bzw. ortsfeste Einrichtungen, wie Container, Automaten, Messwert- und Erfassungsstationen etc. verwendbar ist.

13. Einrichtung zur Rufnummeminformation zwischen Teilnehmern eines oder mehrerer Telekommunikationsnetze, insbesondere Mobilfunknetze, wobei die Rufnummer oder Rufadresse zumindest des anzurufenden Teilnehmers dem rufenden Teilnehmer zunächst nicht bekannt ist,
**dadurch gekennzeichnet,**
**dass** eine zentrale Einrichtung (5; 106) innerhalb oder in Anschaltung an mindestens ein Telekommunikationsnetz (1; 103) derart ausgeführt ist, dass sie über zumindest je eine Ein- und Auswahlsteuerungseinrichtung (116; 123) (Verbindungssteuerung) zum Telekommunikationsnetz sowie über Merkmals/Kennzeichenregister (119) verfügt, denen jeweils mindestens eine Rufnummer bzw. Rufadresse einer zugehörigen Telekommunikationseinrichtung des gleichen oder eines externen Telekommunikationsnetzes zugeordnet sind,
wobei der zentralen Einrichtung (5; 106) eine dienstespezifische Rufnummer zugeordnet ist, unter der die zentrale Einrichtung anwählbar ist, und dem anzurufenden Teilnehmer ein individuelles Merkmal / Kennzeichen zugeordnet ist, das als Wahlbestandteil der dienstespezifischen Rufnummer an die zentrale Einrichtung übermittelbar ist,
wobei bei einer Anfrage unter Verwendung des im Merkmals/Kennzeichenregister gespeicherten Merkmals/Kennzeichens automatisch oder teilnehmergesteuert ein Verbindungsaufbau unter Verwendung der dem Merkmal/Kennzeichen zugeordneten Rufnummer/Rufadresse zu dem zugeordneten Telekommunikationseinrichtung erfolgt.

14. Einrichtung nach Anspruch 13, **dadurch gekennzeichnet, dass** mehrere einem Merkmal/Kennzeichen zugeordnete Rufnummem/Rufadressen vorhanden sind, die mittels Menüsteuerung dem rufenden Teilnehmer zur Auswahl angeboten werden.

15. Einrichtung nach einem der Ansprüche 13 oder 14, **dadurch gekennzeichnet, dass** die zentrale Einrichtung (5; 106) als physikalische oder als Softwarelösung im Telekommunikationsnetz implementiert ist.

16. Einrichtung nach einem der Ansprüche 13 bis 15, **dadurch gekennzeichnet, dass** die zentrale Einrichtung (5; 106) mit einer akustischen oder visuellen Benutzerführung (Menüsteuerung) (117) insbesondere zur Vergrößerung des Diensteangebotes bzw. zur Vereinfachung der Bedienung ausgestattet ist.

17. Einrichtung nach einem der Ansprüche 13 bis 16, **dadurch gekennzeichnet, dass** in der zentralen Einrichtung eine zusätzliche Authentisierungseinrichtung (117) vorgesehen ist, die mittels Passwörtern den Zugriff auf die zugeordnete Rufnummer/Rufadresse bzw. auf zusätzliche zugeordnete Rufnummern ermöglicht.

18. Einrichtung nach einem der Ansprüche 13 bis 17, **dadurch gekennzeichnet, dass** die zugelassenen Passwörter Personal identification Codes, in besonderen, vorzugsweise den jeweiligen zugeordneten Rufnummern zugeordneten Passwortregistern (121) als Referenz hinterlegt sind.

19. Einrichtung nach einem der Ansprüche 13 bis 18, **dadurch gekennzeichnet, dass** den zugeordneten Rufnummern zusätzliche Register (120) zugeordnet sind, die die Art des Zugriffes bzw. der Verwendung der betreffenden zugeordneten Rufnummern beschreiben und insbesondere der funktionalen Kennzeichnung und der Zugriffssteuerung in Verbindung mit der Authentisierungs-und Menüsteuerungseinrichtung (117) dienen.

20. Einrichtung nach einem der Ansprüche 13 bis 19, **dadurch gekennzeichnet, dass** die zentrale Einrichtung (106) über zumindest ein Administrationsterminal (107) zwecks Eingabe und Konfiguration aller Daten verfügt und/oder über eine Client-Server-Steuerung sowie eine entsprechende sicherheitstechnische Zugriffssteuerungskomponente zur abgesetzten, remote, Anschaltung von Administrationsterminals, für beispielsweise externe Großkunden oder Serviceprovider, die ihre Datenbestände selbst zumindest teilweise Pflegen können.

21. Einrichtung nach einem der Ansprüche 13 bis 20, **dadurch gekennzeichnet, dass** die Anschaltung zumindest einer externen Datenbank (108) an die zentrale Einrichtung vorgesehen ist, die in Kombination mit der Authentisierungs- und Menüsteuerungseinrichtung (117) sowie einer zusätzlichen Datenbanksteuerungseinrichtung, Datenbankclient, den authorisierten Zugriff auf externe und in der Regel besonders gesicherten Daten für zumindest eine definierte Benutzergruppe ermöglicht.

22. Einrichtung nach einem der Ansprüche 13 bis 21, **dadurch gekennzeichnet, dass** die Anschaltung zumindest eines externen Kommunikationsnetzes (111), die direkte Anschaltung von Groß- und Geschäftskunden, Intranet-, LAN- und Serverwelt, bzw. die Anschaltung zum Internet (113) an die zentrale Einrichtung durchgeführt ist.

23. Einrichtung nach einem der Ansprüche 13 bis 22, **dadurch gekennzeichnet, dass** beim Anschluss externer Telekommunikationsnetze (111), Intranet- bzw. Internetanschlüsse (113) eine erweiterte Benutzersteuerung zur Ein- bzw. Ausgabe von Daten in der zentralen Einrichtung (106) vorgenommen wird.

24. Einrichtung nach einem der Ansprüche 13 bis 23, **dadurch gekennzeichnet, dass** die zentrale Einrichtung über zusätzliche eingangsseitige Anschlussmöglichkeiten (116; 123), Verbindungssteuerungseinrichtungen, verfügt, um aus unterschiedlichen Telekommunikationsnetzen (111), oder dem Internet (113) aus direkt erreichbar zu sein und somit der erfindungsgemäße Service in unterschiedlichen Netzen direkt angeboten werden kann.

## Claims

1. Method for providing telephone number information between subscribers of one or more telecommunications networks, in particular mobile telephone networks, wherein the telephone number or call address of at least the subscriber to be called is initially not known to the calling subscriber, wherein a central facility (5; 106) is connected to at least one of the communications networks (1; 103) and designed in such a way that it has at least one dial-up and one selection control device (116, 123) to the telecommunications network as well as attribute / identifier registers (113) to which are allocated telephone number registers each with at least one telephone number or web address of an associated telecommunications device of the same or an external telecommunications network, wherein the method comprises the following steps:
- dialling of the central facility (5; 106) using a service-specific telephone number by the calling subscriber and transmission of an individual attribute /identifier of the subscriber to be called as a dialling component of the service-specific telephone number to the central facility,
- checking in the central facility whether the transmitted attribute / identifier is in the attribute / identifier register (119) as a reference entry,
- addressing of the register set (122) of the associated telephone number or numbers in the telephone number register with the aid of the transmitted attribute / identifier which is in the identifier register,
- automatic or subscriber-controlled establishment of a connection between the calling subscriber and the subscriber to be called, using the telephone number /call address allocated to the attribute / identifier.

2. Method according to claim 1, **characterised in that** attributes/identifiers which are known to everyone or are readily apparent or available to everyone are used as personal and/or individual attributes/identifiers of the subscribers.

3. Method according to one of claims 1 or 2, **characterised in that** a sequence of numerical or alphanumerical characters is used as the attribute/identifier.

4. Method according to one of claims 1 to 3, **characterised in that** the registration number of a vehicle of the subscribers is used as the attribute/identifier.

5. Method according to one of claims 1 to 4, **characterised in that** the data entered in the central facility (5) are used for allocation and conversion of the subscriber-individual identifiers to the telecommunications network-specific telephone number or call address.

6. Method according to one of claims 1 to 5, **characterised in that**, to set up the service for the first time, the subscriber transmits at least one personal and/or individual attribute/identifier to the central facility (106), which is there allocated to his telephone number/call address and, together with the latter, stored in the attribute/identifier register (119).

7. Method according to one of claims 1 to 6, **characterised in that** transmission of the data between the subscribers and the central facility is effected via the short message service of a mobile telephone network, SMS.

8. Method according to one of claims 1 to 6, **characterised in that** transmission of the data between the subscribers and the central facility is effected by means of DTMF signalling.

9. Method according to one of claims 1 to 8, **characterised in that** connection of at least one external database (108) to the central facility (106) is provided, which, in combination with an authentication and menu control device as well as an additional database control device, database client, allows authorised access to external and as a rule specially protected data for at least one defined user group.

10. Method according to one of claims 1 to 9, **characterised in that**, in case of external database connection, user control is carried out for entry or output of the data to the central facility.

11. Method according to one of claims 1 to 10, **characterised in that** the central facility (5; 106) in all connected communications networks can be reached in a preferred configuration via the same preferably abbreviated number/address.

12. Method according to one of claims 1 to 11, **characterised in that**, with corresponding individual identification, the method can be used for any mobile means of transport such as passenger, freight and construction site vehicles, boats, aircraft, railway carriages, etc. as well as any mobile or stationary devices such as containers, slot machines, measurement and detection stations, etc.

13. Equipment for providing telephone number information between subscribers of one or more telecommunications networks, in particular mobile telephone networks, wherein the telephone number or call address of at least the subscriber to be called is initially not known to the calling subscriber,
**characterised in that**
a central facility (5; 106) is constructed within or connected to at least one telecommunications network (1; 103) in such a way that it has at least one dial-up and one selection control device (116, 123) (connection control) to the telecommunications network as well as attribute/identifier registers (119) to which are allocated in each case at least one telephone number or call address of an associated telecommunications device of the same or an external telecommunications network, wherein the central facility (5; 106) is allocated a service-specific telephone number under which the central facility can be dialled up, and the subscriber to be called is allocated an individual attribute / identifier which can be transmitted as a dialling component of the service-specific telephone number to the central facility, wherein, in case of a request using the attribute/identifier stored in the attribute/identifier register, a connection to the associated telecommunications device is established automatically or under subscriber control, using the telephone number/call address allocated to the attribute/identifier.

14. Equipment according to claim 13, **characterised in that** there are several telephone numbers/call addresses which are allocated to an attribute/identifier and which are offered to the calling subscriber for selection by menu control.

15. Equipment according to one of claims 13 or 14, **characterised in that** the central facility (5; 106) is implemented in the telecommunications network as a physical or software solution.

16. Equipment according to one of claims 13 to 15, characterised that the central facility (5; 106) is equipped with an acoustic or visual user guide (menu control) (117) in particular for increasing the range of services or to simplify operation.

17. Equipment according to one of claims 13 to 16, **characterised in that** in the central facility is provided an additional authentication device (117) which allows access to the allocated telephone number/call address or to additional allocated telephone numbers by means of passwords.

18. Equipment according to one of claims 13 to 17, **characterised in that** the permitted passwords, personal identification codes, are deposited as a reference in special password registers (121) preferably allocated to the respective allocated telephone numbers.

19. Equipment according to one of claims 13 to 18, **characterised in that** the allocated telephone numbers are allocated additional registers (120) which describe the type of access or use of the allocated telephone numbers concerned and in particular serve for functional identification and access control in connection with the authentication and menu control device (117).

20. Equipment according to one of claims 13 to 19, **characterised in that** the central facility (106) has at least one administration terminal (107) for the purpose of entry and configuration of all data and/or a client-server control system as well as a corresponding security-related access control component for remote connection of administration terminals, for example for major external customers or service providers which can at least partially maintain their databases themselves.

21. Equipment according to one of claims 13 to 20, **characterised in that** the connection of at least one external database (108) to the central facility is provided, which, in combination with the authentication and menu control device (117) as well as an additional database control device, database client, allows authorised access to external and as a rule specially protected data for at least one defined user group.

22. Equipment according to one of claims 13 to 21, **characterised in that** connection of at least one external communications network (111), direct connection of major and business customers, intranet, LAN and servers, or connection to the internet (113) is carried out to the central facility.

23. Equipment according to one of claims 13 to 22, **characterised in that**, in case of connection of external telecommunications networks (111), intranet or internet terminals (113), extended user control is carried out for the entry or output of data in the central facility (106).

24. Equipment according to one of claims 13 to 23, **characterised in that** the central facility has additional connection facilities on the input side (116; 123), connection control devices, in order to be directly attainable from different telecommunications networks (113) or the internet (113), and therefore the service according to the invention can be offered directly in different networks.

## Revendications

1. Procédé pour la communication de numéros d'appel entre abonnés d'un ou plusieurs réseaux de télécommunication, en particulier des réseaux de téléphonie mobile, étant précisé que le numéro d'appel ou l'adresse d'appel de l'abonné à appeler, au moins, n'est tout d'abord pas connu de l'abonné appelant, étant précisé qu'un dispositif central (5 ; 106) est relié à l'un au moins des réseaux de communication (1 ; 103) et est conçu de manière à disposer d'au moins un dispositif de commande de connexion et de déconnexion (116, 123) au réseau de télécommunication et de registres de caractéristiques/d'identificateurs (113) auxquels sont attribués des registres de numéros d'appel avec chacun au moins un numéro d'appel ou une adresse de réseau d'un dispositif de télécommunication correspondant du même réseau de télécommunication ou d'un réseau de télécommunication externe,
étant précisé que le procédé comprend les étapes qui consistent :
- à appeler, par l'abonné appelant, le dispositif central (5 ; 106) en utilisant un numéro d'appel propre au service et à transmettre au dispositif central une caractéristique/identificateur individuel de l'abonné à appeler, comme composant du numéro d'appel propre au service,
- à vérifier dans le dispositif central si la caractéristique/l'identificateur transmis est présent comme inscription de référence dans le registre de caractéristiques/identificateurs (119),
- à adresser l'ensemble de registres (122) du ou des numéros d'appel correspondants dans le registre de numéros d'appel, à l'aide de la caractéristique/de l'identificateur transmis et présent dans le registre d'identificateurs,
- à établir de manière automatique ou commandée par l'abonné une liaison entre l'abonné appelant et l'abonné à appeler, en utilisant le numéro d'appel/l'adresse d'appel attribué à la caractéristique/à l'identificateur.

2. Procédé selon la revendication 1, **caractérisé en ce qu'**on utilise comme caractéristiques/identificateurs personnels et/ou individuels des abonnés des caractéristiques/identificateurs que tout le monde connaît, qui sont facilement apparents ou accessibles pour tout le monde.

3. Procédé selon l'une des revendications 1 ou 2, **caractérisé en ce qu'**on utilise comme caractéristique/identificateur une suite de caractères numériques ou alphanumériques.

4. Procédé selon l'une des revendications 1 à 3, **caractérisé en ce qu'**on utilise comme caractéristique/identificateur le numéro d'immatriculation d'un véhicule des abonnés.

5. Procédé selon l'une des revendications 1 à 4, **caractérisé en ce que** les données inscrites dans le dispositif central (5) sont utilisées pour l'attribution et la conversion des identificateurs individuels des abonnés au numéro d'appel ou à l'adresse d'appel propre au réseau de télécommunication.

6. Procédé selon l'une des revendications 1 à 5, **caractérisé en ce que** l'abonné, pour la première ouverture du service, transmet au dispositif central (106) au moins une caractéristique/un identificateur personnel et/ou individuel qui est attribué dans ce dispositif central (106) à son numéro d'appel/adresse d'appel et qui est mis en mémoire avec celui-ci/celle-ci dans le registre de caractéristiques/d'identificateurs (119).

7. Procédé selon l'une des revendications 1 à 6, **caractérisé en ce que** la transmission des données entre les abonnés et le dispositif central se fait par l'intermédiaire du service de messages courts d'un réseau mobile, SMS.

8. Procédé selon l'une des revendications 1 à 6, **caractérisé en ce que** la transmission des données entre les abonnés et le dispositif central se fait à l'aide d'une signalisation DTMF.

9. Procédé selon l'une des revendications 1 à 8, **caractérisé en ce qu'**il prévoit la connexion d'au moins une banque de données externe (108) au dispositif central (106) qui, en combinaison avec un dispositif d'authentification et de commande par menu et avec un dispositif de commande de banque de données supplémentaire, client de banque de données, permet l'accès autorisé à des données externes, et généralement particulièrement protégées, pour au moins un groupe d'utilisateurs défini.

10. Procédé selon l'une des revendications 1 à 9, **caractérisé en ce que** dans le cas d'un raccordement externe de la banque de données, la commande d'utilisateur pour entrer et émettre les données vers le dispositif central est réalisée.

11. Procédé selon l'une des revendications 1 à 10, **caractérisé en ce que** le dispositif central (5 ; 106) est accessible dans tous les réseaux de communication raccordés, dans une configuration préférée et par l'intermédiaire du même numéro abrégé/adresse, de préférence.

12. Procédé selon l'une des revendications 1 à 11, **caractérisé en ce qu'**il est utilisable, avec une identification individuelle correspondante, pour n'importe quel moyen de transport mobile tel que des voitures particulières, des véhicules de marchandises, des véhicules de chantier, des bateaux, des avions, des wagons, etc., et pour n'importe quels dispositifs mobiles ou fixes tels que des conteneurs, des distributeurs automatiques, des stations de valeurs de mesure et de détection, etc.

13. Dispositif pour la communication de numéros d'appel entre abonnés d'un ou plusieurs réseaux de télécommunication, en particulier des réseaux de téléphonie mobile, étant précisé que le numéro d'appel ou l'adresse d'appel de l'abonné à appeler, au moins, n'est tout d'abord pas connu de l'abonné appelant,
**caractérisé en ce qu'**un dispositif central (5 ; 106) prévu à l'intérieur d'au moins un réseau de communication (1 ; 103) ou relié à celui-ci est conçu de manière à disposer d'au moins un dispositif de commande de connexion et de déconnexion (116 ; 123) (commande de liaison) au réseau de télécommunication, et de registres de caractéristiques/identificateurs (119) auxquels est attribué au moins un numéro d'appel ou une adresse d'appel d'un dispositif de télécommunication correspondant du même réseau de télécommunication ou d'un réseau de télécommunication externe,
étant précisé qu'un numéro d'appel propre au service est attribué au dispositif central (5 ; 106), grâce auquel le dispositif central peut être adressé, et qu'une caractéristique/un identificateur individuel est attribué à l'abonné à appeler et est apte à être transmis, comme composant du numéro d'appel propre au service, au dispositif central,
étant précisé que lors d'une demande à l'aide de la caractéristique/de l'identificateur mis en mémoire dans le registre de caractéristiques/d'identificateurs, l'établissement d'une liaison avec le dispositif de télécommunication attribué se fait de manière automatique ou commandée par l'abonné, à l'aide du numéro d'appel/de l'adresse d'appel attribué à la caractéristique/à l'identificateur.

14. Dispositif selon la revendication 13, **caractérisé en ce qu'**il est prévu plusieurs numéros d'appel/adresses d'appel qui sont attribués à une caractéristique/identificateur et qui sont proposées à la sélection à l'abonné appelant, à l'aide d'une commande par menu.

15. Dispositif selon l'une des revendications 13 ou 14, **caractérisé en ce que** le dispositif central (5 ; 106) est implémenté sous forme de solution physique ou de solution logiciel dans le réseau de télécommunication.

16. Dispositif selon l'une des revendications 13 à 15, **caractérisé en ce que** le dispositif central (5 ; 106) est équipé d'un guide d'utilisateur (commande par menu) acoustique ou visuel (117), en particulier pour élargir l'offre de services ou pour simplifier la commande.

17. Dispositif selon l'une des revendications 13 à 16, **caractérisé en ce qu'**il est prévu dans le dispositif central un dispositif d'authentification supplémentaire (117) qui permet, à l'aide de mots de passe, l'accès au numéro d'appel/à l'adresse d'appel attribué ou à des numéros d'appel attribués supplémentaires.

18. Dispositif selon l'une des revendications 13 à 17, **caractérisé en ce que** les mots de passe autorisés, codes d'identification personnels, sont déposés comme référence dans des registres de mots de passe (121) spéciaux, qui sont de préférence attribués aux numéros d'appel attribués respectifs.

19. Dispositif selon l'une des revendications 13 à 18, **caractérisé en ce que** des registres supplémentaires (120) sont attribués aux numéros d'appel attribués et décrivent le type d'accès ou d'utilisation des numéros d'appel attribués concernés, et servent en particulier à l'identification fonctionnelle et à la commande d'accès, en liaison avec le dispositif d'authentification et de commande par menu (117).

20. Dispositif selon l'une des revendications 13 à 19, **caractérisé en ce que** le dispositif central (106) dispose d'au moins un terminal de gestion (107) en vue de l'entrée et de la configuration de toutes les données, et/ou d'une commande client-serveur ainsi que d'un composant de commande d'accès de protection correspondant pour la connexion à distance de terminaux de gestion, par exemple pour des gros clients ou des fournisseurs de service externes qui peuvent au moins en partie stocker eux-mêmes leurs données.

21. Dispositif selon l'une des revendications 13 à 20, **caractérisé en ce qu'**il est prévu la connexion d'au moins une banque de données externe (108) au dispositif central qui, en combinaison avec le dispositif d'authentification et de commande par menu (117) et avec un dispositif de commande de banque de données supplémentaire, client de banque de données, permet l'accès autorisé à des données externes, et généralement particulièrement protégées, pour au moins un groupe d'utilisateurs défini.

22. Dispositif selon l'une des revendications 13 à 21, **caractérisé en ce que** la connexion d'au moins un réseau de communication externe (111), la connexion directe de gros clients ou d'entreprises clientes (Intranet, LAN et serveur) ou la connexion à l'Internet (113) sont réalisées avec le dispositif central.

23. Dispositif selon l'une des revendications 13 à 22, **caractérisé en ce que** lors du raccordement de réseaux de télécommunication externes (111), de connexions Intranet ou Internet (113), une commande d'utilisateur élargie pour l'entrée et l'émission de données est réalisée dans le dispositif central (106).

24. Dispositif selon l'une des revendications 13 à 23, **caractérisé en ce que** le dispositif central dispose de possibilités de raccordement côté entrée supplémentaires (116 ; 123), dispositifs de commande de liaison, pour être accessible directement à partir de différents réseaux de télécommunication (111) ou de l'Internet (113), et le service de l'invention peut ainsi être proposé directement dans différents réseaux.
